Europäisches Patentamt

European Patent Office

Office européen des brevets

(19)

(11) Veröffentlichungsnummer: **0 181 626**
**B1**

(12) **EUROPÄISCHE PATENTSCHRIFT**

(45) Veröffentlichungstag der Patentschrift: **22.11.90**

(21) Anmeldenummer: **85114303.2**

(22) Anmeldetag: **09.11.85**

(51) Int. Cl.⁵: **F 23 C 6/04,** F 23 C 11/02,
F 23 N 1/00, F 22 B 35/00,
F 22 B 31/00, B 01 J 8/28

(54) **Kesselanlage für eine mehrbettige Brennkammer und Verfahren zu ihrer Steuerung und Regelung.**

(30) Priorität: **16.11.84 SE 8405746**

(43) Veröffentlichungstag der Anmeldung:
**21.05.86 Patentblatt 86/21**

(45) Bekanntmachung des Hinweises auf die
Patenterteilung:
**22.11.90 Patentblatt 90/47**

(84) Benannte Vertragsstaaten:
**AT DE FR GB NL**

(56) Entgegenhaltungen:
FR-A-2 203 964     US-A-4 476 816
FR-A-2 376 362
PATENT ABSTACTS OF JAPAN, Band 9, Nr. 256
(M-421)1979r, 15. Oktober 1985; & JP-A-60 105
807 (EBARA SEISAKUSHO K.K.) 11-06-1985
PATENT ABSTRACTS OF JAPAN, Band 5, Nr. 6
(M-50)678r, 16. Januar 1981; & JP-A-55 140 008
(EBARA SEISAKUSHO K.K.) 01-11-1980
PATENT ABSTRACTS OF JAPAN, Band 6, Nr.
216 (M-168)1094r, 29. Oktober 1982; & JP-A-57
122 206 (BABCOCK HITACHI K.K.) 30-07-1982

(73) Patentinhaber: **ASEA STAL Aktiebolag**
**S-721 83 Västeras (SE)**

(72) Erfinder: **Bergkvist, Jörgen**
**N. Storängsvägen 31**
**S-612 00 Finspong (SE)**

(74) Vertreter: **Boecker, Joachim, Dr.-Ing.**
**Rathenauplatz 2-8**
**D-6000 Frankfurt a.M. 1 (DE)**

## Beschreibung

Die vorliegende Erfindung betrifft eine Kesselanlage für eine mehrbettige Brennkammer gemäß dem Oberbegriff des Anspruches 1 sowie ein Verfahren zur Steuerung oder Regelung dieser Kesselanlage. Eine Kesselanlage mit den im Oberbegriff genannten Merkmalen ist bekannt aus der US-A-4 476 816.

Die beiden Brennkammerräume sind übereinander angeordnet und enthalten fluidisierbare Betten zur Verbrennung eines Brennstoffes und zur Entfernung von im Brennstoff enthaltenen Schwefel. Der Brennstoff wird einem ersten Wirbelbett in dem ersten Brennkammerraum zugeführt. Verbrennungsgase, unverbrannte Brennstoffpartikel und leichte Aschenpartikel, die den Verbrennungsgasen beigemengt sind, strömen durch die Düsen nach oben in das zweite Wirbelbett in dem zweiten Brennkammerraum. Der überwiegende Teil der Verbrennung findet im ersten Wirbelbett statt. Unverbrannter Brennstoff, welcher mit den Verbrennungsgasen in das zweite Bett gelangt, wird dort verbrannt.

Das Bettmaterial in sowohl dem ersten wie in dem zweiten Bett besteht normalerweise aus Kohlenasche und eventuell Quarzsand, und wenn zugleich schwefelreicher Brennstoff entschwefelt werden soll, auch teilweise aus Absorptionsmittel für Schwefel, wie zum Beispiel Kalkstein oder Dolomit. Das Schwefel-Absorptionsmittel kann einem oder beiden Betten zugeführt werden, vorzugsweise wird es jedoch dem zweiten Bett zugeführt. Das kornförmige Bettmaterial hat bei seiner Einführung in die Brennkammer eine solche Korngröße, daß es Betten bildet, die geeignete Fluidisierungseigenschaften aufweisen, und die ein Fortblasen des Bettmaterials durch das Fluidisierungsgas verhindern.

Mehrbettige Brennkammern mit übereinander angeordneten Wirbelbetten sind zum Beispiel bekannt aus der US-A-4 279 207.

Eine Bedingung zur Erzielung einer guten Arbeitsweise während der Verbrennung in einem Wirbelbett besteht darin, daß die Temperatur innerhalb eines ziemlich eng begrenzten Bereiches gehalten werden kann, und zwar auch im Falle variierender Betthöhen und variierender Leistungsabgabe (Lastzustände) durch die Kesselanlage. Die Brennkammer mit dem Verbrennungsbett enthält ein Rohrbündel, über welches mehr als die Hälfte der von der Kesselanlage erzeugten Energie abgeführt wird. Das Rohrbündel kühlt zugleich das Bettmaterial, so daß dessen Überhitzung verhindert wird. Um zu verhindern, daß das Rohrbündel bei Teillast die Temperatur des Bettmaterials unter einen Wert abkühlt, der für die Aufrechterhaltung der Verbrennung notwendig ist, wird die Betthöhe derart herabgesetzt, daß ein Teil der Lagen des Rohrbündels über der Bettoberfläche, also außerhalb des Bettmaterials, liegt. Dadurch wird die Kühlwirkung des Rohrbündels herabgesetzt.

In bekannten mehrbettigen Brennkammern wird von dem unteren Bett, in welchem der größte Teil der Verbrennung stattfindet, Bettmaterial abgezogen. Dieses abgezogene Bettmaterial wird während des Teillastbetriebes in einem Vorratsraum aufbewahrt, der außerhalb der eigentlichen Brennkammer angeordnet ist. Gemäß der obengenannten US-A-4 279 207 wird aus einem Bett abgezogenes Bettmaterial in einem Raum unterhalb des Brennkammerraum, in dem sich Verbrennungsbett befindet, aufbewahrt. Das Bettmaterial in diesem Raum wird durch die Verbrennungsluft im fluidisierten Zustand gehalten und dabei abgekühlt. Wenn das Bettmaterial bei einem Lastanstieg wieder in das Verbrennungsbett zurückgespeist wird, so befindet es sich in einem abgekühlten Zustand. Die erforderliche Wiederaufheizung dieses Bettmaterials nach seiner Rückführung in das Verbrennungsbett hat einen langsameren Lastanstieg zur Folge, als wenn Bettmaterial dem Bett zugeführt werden würde, welches im wesentlichen die gleiche Temperatur wie das Bett hat.

Aus der US-A-4 476 816 it eine Kesselanlage mit einer Vielzahl von beispielsweise neun Wirbelbettkammern bekannt, wobei das Gehäuse der Kesselanlage sich von einem Mittelabschnitt, in welchem der Brennstoff zugeführt wird, nach oben und unten verjüngt. Die Brennkammerräume, die oberhalb der Brennstoffzuführstelle liegen, sind mit kühlbaren Rohren zur Dampferzeugung ausgerüstet, und zwar sind solche Rohre sowohl im Boden des Brennkammerraums wie auch im eigentlichen Brennkammerraum angeordnet. Von oben wird der Brennkammer Bettmaterial zugeführt, welches meanderförmig oder über Rohrverbindungen von einem Brennkammerraum in den nächsten darunterliegenden Brennkammerraum rieselt. Die Durchsatzgeschwindigkeit des Bettmaterials durch die gesamte Kesselanlage kann durch Gegenluft in den vertikalen Verbindungsrohren zwischen benachbarten Brennkammerräumen gedrosselt werden. Diese Steuerungsmöglichkeit wird auch dazu verwendet, die Betthöhe in dem jeweils darüberliegenden Brennkammerraum den augenblicklichen Leistungsbedarf anzupassen. Die Verbrennungsluft wird ganz unten in der Kesselanlage zugeführt und durchströmt zunächst mehrere Wirbelbettkammern, in denen keine Verbrennung stattfindet.

Der Erfindung liegt die Aufgabe zugrunde, eine Kesselanlage der eingangs genannten Art zu entwickeln, die sich ändernden Leistungsanforderungen schneller anzupassen vermag als bekannte Kesselanlagen dieser Art. Ferner soll ein Verfahren zur Steuerung oder Regelung dieser Kesselanlage entwickelt werden.

Zur Lösung dieser Aufgabe wird eine Kesselanlage für eine mehrbettige Brennkammer gemäß dem Oberbegriff des Anspruches 1 vorgeschlagen, welche erfindungsgemäß die im kennzeichnenden Teil des Anspruches 1 genannten Merkmale hat.

Vorteilhafte Ausgestaltungen der Erfindung sind in den Ansprüchen 2 bis 6 genannt.

Ein Verfahren zur Steuerung oder Regelung einer Kesselanlage gemäß der Erfindung ist durch die Merkmale des Anspruchs 7 gekennzeichnet.

Vorteilhafte Ausgestaltungen dieses Verfahrens sind in den Ansprüchen 8 bis 10 genannt.

Gemäß der Erfindung wird das gesteckte Ziel also dadurch erreicht, daß eine im wesentlichen konstante Bettmaterialmenge in der Brennkammer vorhanden ist und daß die Brennkammer mit einer oder mehreren Transporteinrichtung/en ausgerüstet ist, die Bettmaterial zwischen den Betten transportieren können, also Bettmaterial aus dem unteren Bett in das obere Bett und umgekehrt befördern können. Ferner sind Druckmesser vorgesehen zur Messung der Betthöhen und Thermoelemente zur Messung der Temperatur in dem ersten Bett der Brennkammer, also dem eigentlichen Verbrennungsbett. Diese Meßgeräte sind an eine Signalverarbeitungs- und Steuer- bzw. Regelanlage angeschlossen zur Steuerung oder Regelung der Bettmaterialmenge im ersten Bett in Abhängigkeit der verlangten Leistung und zur Konstanthaltung der gesamten Bettmaterialmenge. Dies wird erreicht durch den Transport von Bettmaterial in der einen oder anderen Richtung zwischen dem ersten und dem zweiten Bett und durch Abführung von Bettmaterial aus einem der Betten. Das Verfahren zur Steuerung oder Regelung der Kesselanlage gemäß der Erfindung arbeitet mit Hilfe der obengenannten Meßglieder und der Signalverarbeitungsanlage, an welche diese Meßglieder angeschlossen sind.

Anhand der in den Figuren gezeigten Ausführungsbeispiele soll die Erfindung näher erläutert werden. Es zeigen

Figur 1 schematisch eine Kesselanlage mit einer zweibettigen Brennkammer und Hilfseinrichtungen für den Betrieb und die Steuerung der Brennkammer,

Figuren 2 und 3 die Brennkammer im Betrieb bei Vollast beziehungsweise bei herabgesetzter Last,

Figur 4 den Zusammenhang zwischen dem Luftstrom durch das zugehörige Bett und dem Druckverlust am Bett,

Figur 5 den Zusammenhang zwischen dem Luftstrom und der entwickelten Leistung.

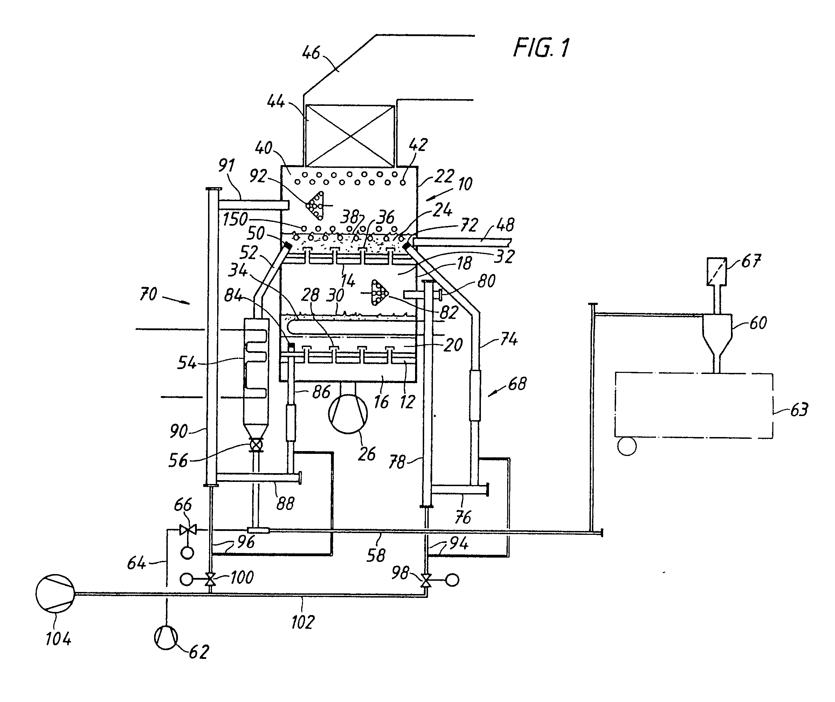

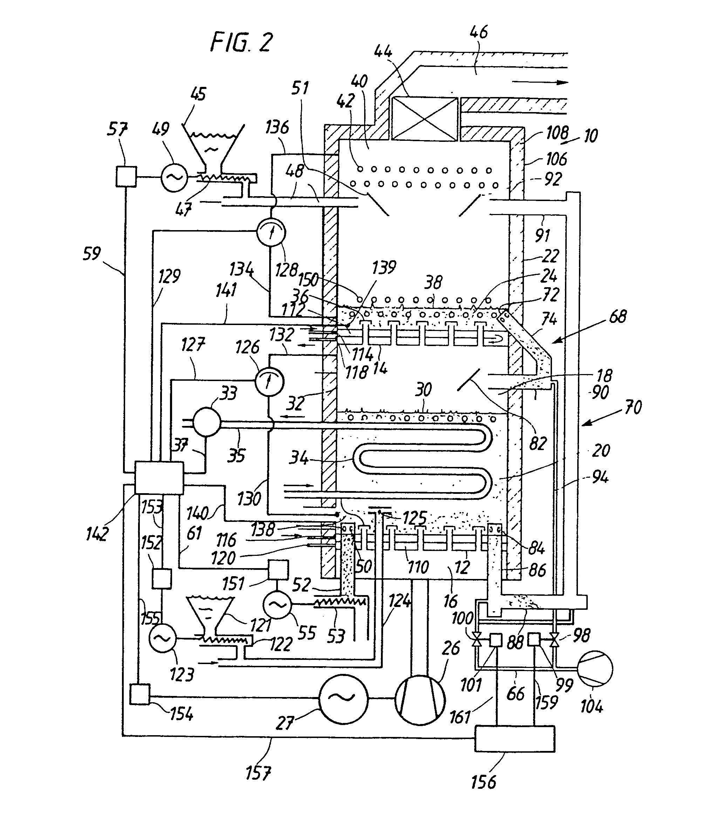

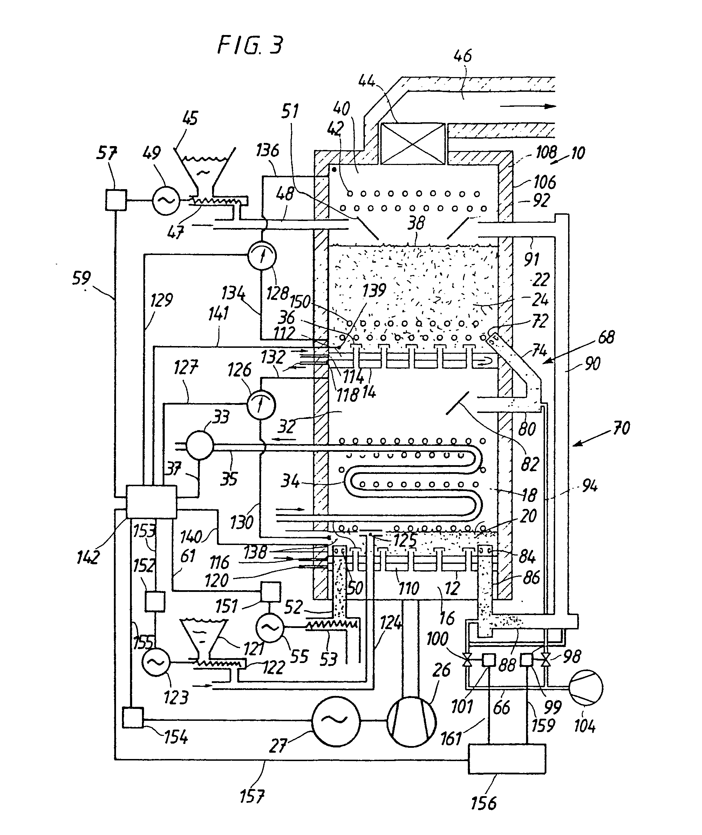

In Figur 1 bezeichnet 10 eine Brennkammern mit zwei gekühlten Böden 12 und 14, welche die Brennkammer in eine Luftkammer 16, einen ersten Brennkammerraum 18 für ein erstes Wirbelbett 20 und einen zweiten Brennkammerraum 22 für eine zweites Wirbelbett 24 unterteilen. Die Luft kammer 16 wird von einem Lüfter oder Kompressor 26 mit Verbrennungsluft versorgt. Der Lüfter oder Kompressor wird von einem steuerbaren oder regelbaren Motor 27 angetrieben (Figur 2 und 3). Der Brennkammerraum 18 wird über Düsen 28 mit Verbrennungsluft versorgt, welche das Bettmaterial im Bett 20 fluidisiert und den dem Bett zugeführten Brennstoff verbrennt. Die Düsen 28 sind so beschaffen, daß sie das Herunterfließen von Bettmaterial in den Raum 16 verhindern. Über der Oberfläche 30 des Wirbelbettes 20 ist ein Freiraum 32 vorhanden, in welchem sich Verbrennungsgase sammeln. Das Wirbelbett 20 ist mit einem Rohrbündel 34 versehen, welches der Kühlung des ersten Wirbelbettes und der Erhitzung von Wasser oder Erzeugung von Dampf dient. Der Boden 14 des zweiten Wirbelbettes 24 ist mit Düsen 36 versehen, durch welche Verbrennungsgase in den zweiten Brennkammerraum 22 geleitet werden, welche das Bettmaterial im Wirbelbett 24 fluidisieren. Im Wirbelbett 24 ist ein nicht gekühltes Rohrbündel 150 angeordnet, welches Gasblasen im Bett auseinanderreißt und die Menge an Bettmaterial reduziert, welche von der Oberfläche 38 nach oben geschleudert wird. Über der Oberfläche 38 des Bettes 24 ist ein Freiraum 40 vorhanden. Im oberen Teil des Freiraums 40 sind eine oder mehrere Lagen von Stangen 42 angeordnet, bei denen es sich um ungekühlte oder gekühlte Rohre handeln kann und die die Aufgabe haben, Asche und Bettmaterial zu bremsen und zu verhindern, daß diese Materialen mit den Verbrennungsgasen mitgerissen werden, wenn diese den Brennkammerraum 22 verlassen und in einen nachgeschalteten Rauchgaskühler 44 strömen. Von dem Rauchgaskühler 44 gelangen die Gase zu einem nicht dargestellten Ekonomiser und von dort zu einer Reinigungsanlage zwecks Ausscheidung von Staub, bevor die Gase in einen Schornstein geleitet werden.

Das Wirbelbett 20 ist ein Verbrennungsbett, in welchem der größte Teil des zugeführten Brennstoffes verbrannt wird. Das Bettmaterial kann inert sein und zum Beispiel aus Sand und Asche bestehen, welche während der Verbrennung anfällt. Es kann aber auch im größeren oder kleineren Maße ein Absorptionsmittel für Schwefel enthalten. Aus der Sicht günstiger Betriebsbedingungen, besonders im Hinblick auf das Verstopfen der Düsen im Boden 14, ist es zweckmäßig, wenn das Bett 20 im wesentlichen aus inertem Material besteht, dem Asche und nur in geringem Maße ein Schwefel-Absorptionsmittel beigemengt sind.

Das Wirbelbett 24 ist ein Schwefelabsorptions- und Nachverbrennungsbett, in welchem die Gase begleitender unverbrannter Brennstoff aus dem Brennkammerraum 18 verbrannt wird. Es besteht aus Kohlenasche und eventuell Quarzsand sowie, im Falle der Entschwefelung, auch aus kornförmigem Kalzium enthaltendem Material, zum Beispiel Kalkstein oder Dolomit. Absorptionsmittel wird diesem Bett durch ein Eintrittsrohr 48 zugeführt, und zwar in Abhängigkeit des Schwefelgehaltes des in das Bett 20 eingespeisten Brennstoffes. Verbrauchtes Bettmaterial und Asche, die den Brennkammerraum 22 nicht mit den Gasen verlassen, werden durch Decharchieren von Material aus. dem Wirbelbett 24 beseitigt. Das Material wird über einen Grobfilter 50 und ein Rohr 52 zu einem Aschekühler 54 abgeführt. Von dem Kühler 54 wird das Material mittels eines Rotationsschaufelförderers 56 in ein Förderrohr 58 gespült, durch welches es pneumatisch zu einem Separator 60 und einem Sammelbehälter 63 transportiert wird. Das Rohr 58 wird von einem Lüfter oder Kompressor 62 über eine Leitung 64 und ein Steuerventil 66 mit Transportluft versorgt.

Die Brennkammer ist mit einer ersten Transporteinrichtung 68 zum Transport von heißem Bettmaterial aus dem oberen Bett 24 in das untere Bett 20 und mit einer zweiten Transporteinrichtung 70 zum Transport von heißem Bettmaterial aus dem unteren Bett 20 in das obere Bett 24 ausgerüstet. Zu der Transporteinrichtung 68 gehört ein Grobfilter 72 zur Abscheidung von zu großen Schlackeklumpen und dergleichen, ein vertikales Rohr 74, ein horizontales Rohr 76, welches zusammen mit dem Rohr 74 ein L-Ventil bildet, ein vertikales Förderrohr 78 und ein horizontales Speiserohr 80. Vor der Austrittsöffnung aus dem Rohr 80 befindet sich eine Verteilervorrichtung 82, welche eingespeistes Bettmaterial derart verteilt, daß Errosion vermieden wird und die Störung der Fluidisation während des Einspeisens begrenzt bleibt. Zu der Transporteinrichtung 70 gehören ein Grobfilter 84, ein vertikales Rohr 86, ein horizontales Rohr 88, welches zusammen mit dem Rohr 86 ein L-Ventil bildet, und ein vertikales Förderrohr 90, welches mit dem Speiserohr 91 verbunden ist. Vor der Austrittsöffnung des Speiserohrs 91 befindet sich eine Verteilervorrichtung 92 zur Verteilung des transportierten Bettmaterials über eine große Fläche, um lokale Errosion und die Störung der Fluidisation klein zu halten. Die Transporteinrichtungen 68 und 70 sind über je eine Leitung 94 beziehungsweise 96, je ein Ventil 98 beziehungsweise 100 und eine Leitung 102 an einen Kompressor 104 angeschlossen, welcher die Transporteinrichtungen mit Transportluft versorgt. In großen Anlagen kann eine Mehrzahl von parallel arbeitenden Transporteinrichtungen vorgesehen werden.

Die Figuren 2 und 3 zeigen eine Brennkammer die von der Bauart gemäß Figur 1 etwas abweicht und die außerdem in größerem Maßstab dargestellt ist und weitere Einzelheiten zeigt. Figur 2 zeigt die Brennkammer bei Vollast, und Figur 3 zeigt die Brennkammer bei geringer Last.

Die Brennkammer 10 hat isolierte Wände. Sie besteht aus einem Gehäuse 106, zum Beispiel einer wassergekühlten Paneelwand, welche auf ihrer Innenseite mit einer Isolation 108 versehen ist. Die Böden 12 und 14 können mit einem Hohlraum 110 beziehungsweise 112 für Kühlwasser aufgebaut sein. Der Boden 14 ist ferner zweckmäßigerweise mit einem nicht dargestellten Lufkammerraum versehen zur Zufuhr von Sekundärluft zu dem Bett 24 und für Luft zur Reinigung der Düsen 36, um diese vor Verstopfung zu schützen. Kühlwasser wird zugeführt und abgeführt durch die Leitungen 114, 116 und 118, 120. Wie aus den Figuren 2 und 3 erkennbar, wird Bettmaterial von einem Bettmaterialbehälter 45 über einen Dosierförderer in Form einer Förderschnecke 47 und durch pneumatischen Transport durch die Leitung 48 dem oberen Freiraum 40 zugeführt. Das Bettmaterial besteht aus oder enthält Schwefel-Absorptionsmittel. Die Förderschnecke 47 wird von einem Motor mit verstellbarer Drehzahl angetrieben. An der Öffnung der Leitung 48 befindet sich ein Verteiler für die Bettmaterialzufuhr. Alternativ kann Bettmaterial über Düsen in das Bett 24 eingespeist werden. Die Brennstoffzufuhr in das Bett 20 erfolgt über eine Dosierspeisevorrichtung in Form einer Förderschnecke 122 über eine Leitung 124 und Düsen 125, von denen zweckmäßigerweise eine pro m² Bodenfläche angeordnet ist. Die Förderschnecke wird von einem Motor 123 mit verstellbarer Drehzahl angetrieben. In der Ausführungsform nach den Figuren 2 und 3 wird Bettmaterial und Asche aus dem unteren Bett abgezogen. Das Auslaßrohr 52 in der Ausführungsform gemäß den Figuren 2 und 3 ist an eine einstellbare Decharchiervorrichtung in Form eines Schneckenförderers 53 angeschlossen oder verbunden, welcher von einem Motor 55 mit verstellbarer Drehzahl angetrieben wird. Zur Messung des Druckverlustes an den Betten 20 und 24 sind Differenzdruckmeßgeräte 126 und 128 vorgesehen. Das Manometer 126 ist einerseits über eine Leitung 130 am unteren Teil des Bettes 20 in dem Brennkammerraum 18 angeschlossen und andereseits über Leitung 132 an den Freiraum 32. Das Manometer 128 ist über eine Leitung 134 an den unteren Teil des Bettes 24 in den Brennkammerraum 22 angeschlossen und andererseits über die Leitung 136 an den Freiraum 40. Ferner ist ein Temperaturmeßgerät 138 im unteren Bett 20 und ein Temperaturmeßgerät 139 im oberen Bett 24 angeordnet.

In einem Verbrennungsbett der oben genannten Art findet die Verbrennung im wesentlichen im unteren Bett 20 statt. Unverbrannter Brennstoff, welcher das untere Bett zusammen mit den Verbrennungsgasen verläßt und mit diesen Gasen ins obere Bett 24 transportiert wird, wird im oberen Bett verbrannt. Wenn das Bettmaterial des unteren Bettes 20 aus einem in Bezug auf Schwefel inerten Material besteht, dann ist das untere Bett ein reines Verbrennungsbett, und Schwefel wird im oberen Bett 24 absorbiert.

Wenn das untere Bett 20 kalziumhaltiges Material enthält, wie zum Beispiel Kalk oder Dolomit, so wird Schwefel in beiden Betten absorbiert. In Anbetracht unter anderem der Gefahr der Verstopfung der Düsen 36 kann es in gewissen Fällen, beispielsweise in Abhängigkeit des Brennstoffes, zweckmäßig sein, Absorptionsmittel für Schwefel nur dem oberen Bett 24 zuzuführen.

Die Anlage enthält Meßglieder zur Messung der augenblicklichen Last. In einer Kesselanlage zur Erhitzung von Wasser oder zur Dampferzeugung ist die Abgangsleitung 35 von dem Rohrbündel 34 mit einem Wärmemengenanzeiger 33 ausgerüstet. Die Manometer 126 und 128, die Temperaturmeßeinrichtungen 138 und 139 und der Wärmemengenanzeiger 33 sind an ein gemeinsames Signalverarbeitungsgerät 142 über die Leitungen 127, 129 und 140, 141 und die Leitung 37 angeschlossen. Ein Steuergerät 57 zur Steuerung der Drehzahl des Motors 49, ein Steuergerät 152 zur Steuerung der Drehzahl des Motors 123, ein Steuergerät 154 zur Steuerung der Drehzahl des Kompressormotors 27, ein Steuergerät 151 zur Steuerung der Drehzahl des Motors 55 und ein Steuergerät 156 zur Betätigung der Ventile 98 und 100 sind über die Leitung 59, 153, 155, 61 beziehungsweise 157 an das Signalverarbeitungsgerät 142 angeschlossen. Das Steuergerät 156 ist an die Betätigungsgeräte 99 und 101 für die Ventile 98 und 100 über die Leitungen 159 und 161 angeschlossen. Durch das Steuergerät 156 und die Ventile 98 und 100 wird der Luftstrom für den Transport von Bettmaterial zwischen den Brennkammerräumen 18 und 22 gesteuert. In der gezeigten Ausführungsform wird die der Brennkammer zugeführte Luftmenge durch Verstellung der Drehzahl des Kompressors 26 gesteuert. Alternativ kann ein Kompressor mit konstanter Drehzahl verwendet werden, wobei die Luftmenge durch ein Ventil gesteuert werden kann, welches den Luftfluß drosselt.

Wie bereits erwähnt, ist die Laststeuerung bei einer Kesselanlage mit Verbrennung in einer Wirbelbettbrennkammer komplizierter als bei einer Kesselanlage gewöhnlicher Art. Bei gewöhnlichen Kesselanlagen wird die Leistung schnell herabgesetzt, wenn die Speisung mit Brennstoff und Verbrennungsluft geändert wird. Im gesamten Leistungsbereich können geeignete Bedingungen für die Verbrennung ohne Schwierigkeit aufrechterhalten werden. In einer Kesselanlage mit einer Brennkammer, die ein oder mehrere Wirbelbetten enthält, erfordert eine Änderung der Last Steuermaßnahmen, um die Temperatur im Wirbelbett auf einen geeigneten Wert, normalerweise auf etwa 900°C, zu halten. Änderungen in einem Bereich von +50°C und −100°C können normalerweise zugelassen werden. Die günstigste Temperatur ist in einem gewissen Maße von der Art des Brennstoffes abhängig. Die Rohre 34 im Bett 20 haben einen doppelten Zweck: Einerseits dienen sie zur Heizung von Wasser oder zur Erzeugung von Dampf, und andererseits dienen sie zur Kühlung des Bettes, so daß dessen Temperatur auf einem für die Verbrennung geeigneten Niveau gehalten wird. Wenn die Temperatur unter einen bestimmten Wert sinkt, kann die Verbrennung nicht aufrechterhalten werden. Wenn die Temperatur einen bestimmten Wert übersteigt, schmelzen Asche und eventuell auch Bettmaterial, so daß sich Schlackeklumpen bilden, welche den weiteren Betrieb unmöglich machen können. Im Falle einer Lastverminderung, muß die Höhe des Bettes derart vermindert werden, daß die Oberfläche 30 des Bettes absinkt, so daß eine Anzahl von Lagen des Rohrbündels 34 außerhalb des Bettes zu liegen kommt. Zur gleichen Zeit wird die Zufuhr von Brennstoff und Verbrennungsluft reduziert. Im Falle einer Lasterhöhung wird die Betthöhe derart vergrößert, daß ein größerer Teil des Rohrbündels von dem Bettmaterial umgeben ist. Zur gleichen Zeit wird die Zufuhr von Brennstoff und Verbrennungsluft vergrößert. Da die Wärmeübertragung zwischen dem Bettmaterial und den Rohren um ein Mehrfaches größer ist als die Wärmeübertragung zwischen den Verbrennungsgasen und den Rohren, kann ein solches Gleichgewicht zwischen Wärmezufuhr und Kühlung durch das Rohrbündel 34 erreicht werden, daß die gewünschte Temperatur im Bett 20 aufrechterhalten wird.

Bisher wurde Material des Bettes 20 zwischen dem Bett und einem Behälter außerhalb der Brennkammer transportiert. Dieser Behälter kann unter dem unteren Brennkammerraum angeordnet sein, wie dies in der US-A-4 279 207 beschrieben wird. Bei anderen Ausführungen ist der Behälter vollständig außerhalb der vorhandenen Brennkammer angeordnet.

Im Falle eines Anstieges der Last muß - wie erwähnt - Bettmaterial dem unteren Bett zugeführt werden, damit eine größere Anzahl von Lagen des Rohrbündels 34 vom Bettmaterial umgeben wird. Wenn kaltes Bettmaterial zugeführt wird, so werden große Wärmemengen für die Aufheizung des Bettmaterials verbraucht, was einen schnellen Lastanstieg erschwert. Aus diesem Grunde wurden in verschiedenen Fällen Vorratsbehälter mit Heizeinrichtungen verwendet.

Gemäß der Erfindung ist die Anlage so beschaffen, daß sowohl der untere Brennkammerraum 18 als auch der obere Brennkammerraum 22 für sich die gesamte Bettmaterialmenge aufnehmen kann, die bei Vollast benötigt wird. Der obere Brennkammerraum 22 sollte zumindest imstande sein, ein Minimalbett 24 und diejenige Menge an Bettmaterial aufzunehmen, welche von dem unteren Bett 20 entfernt werden muß, um das Rohrbündel 34 freizulegen.

Bei Betrieb der Kesselanlage ist die Gesamtmenge an Bettmaterial in den Betten 20 und 24 im wesentlichen konstant. Folglich ist auch die Gesamthöhe der beiden Betten 20 und 24 und der Gesamtdruckverlust an ihnen im wesentlichen konstant. Bei einer Laständerung werden die Zufuhr an Luft und Brennstoff und die Betthöhe im unteren Bett verändert. Die Wärmeaufnahme durch das Rohrbündel ist abhängig davon, ein wie großer Teil des Rohrbündels innerhalb beziehungsweise oberhalb des Bettes 20 liegt. Indem die Betthöhe der Wärmeaufnahme des Rohrbündels angepaßt wird, wird die Temperatur des Bettes innerhalb zulässiger Grenzen und so konstant wie möglich gehalten. Abhängig von der Richtung der Laständerung liefert das Steuergerät 142 ein Steuersignal für die Überführung des Bettmaterials von einem Brennkammerraum in den anderen durch Öffnung entweder des Luftventils 98 oder 100, wodurch ein Transport vom Material erreicht wird. Beispielsweise bei einer kleineren Anlage kann die Höhe des oberen Bettes 24 im Falle maximaler Last ungefähr 300 mm betragen und die Höhe des unteren Bettes 20 ungefähr 700 mm. Im Falle der kleinsten Last können die entsprechenden Werte 650 mm und 350 mm betragen. Wie erwähnt, wird die Temperatur des unteren Bettes annähernd konstant gehalten. Die Temperatur des oberen Bettes wird sich jedoch etwas mit der Last ändern und wird bei abnehmender Last sinken, da die Verbrennungsgase, die das Bett 20 verlassen, durch die freigelegten Rohrlagen gekühlt werden. Im Bettmaterial des oberen Bettes befindet sich kein Kühlrohrbündel. Die Temperatur wird daher dort ständig auf einem Wert gehalten, der annähernd so hoch ist wie der des unteren Bettes. Bei einem Lastanstieg kann dann Bettmaterial schnell von dem oberen Bett in das untere Bett übergeführt werden, ohne daß die Verbrennung durch eine Temperaturverminderung im unteren Bett gestört wird. Somit ist ein schneller Leistungsanstieg erreichbar.

Eine große Menge Bettmaterial verläßt die Betten 20, 24 mit den Rauchgasen. Neues Bettmaterial wird eingegeben in Gestalt von Brennstoff und Schwefel-Absorptionsmittel. Dieser Zugang kann den Abgang mit den Rauchgasen übersteigen, so daß die Höhe der Betten steigt. Der Druckverlust an den Betten ist im wesentlichen proportional der Bettmaterialmenge im fluidisierten Zustand. Der von den Differenzdruckmessern gemessene Druckabfall ist daher ein Maß für die Betthöhen. Die Abführung von überflüssigem Bettmaterial wird von Steuereinrichtungen gesteuert, die an die Signalverarbeitungsanlage 142 angeschlossen sind, so daß die Gesamtbetthöhe im wesentlichen konstant gehalten wird und die Höhen der einzelnen Betten nicht einen maximalen Wert überschreitet beziehungsweise einen minimalen Wert unterschreitet.

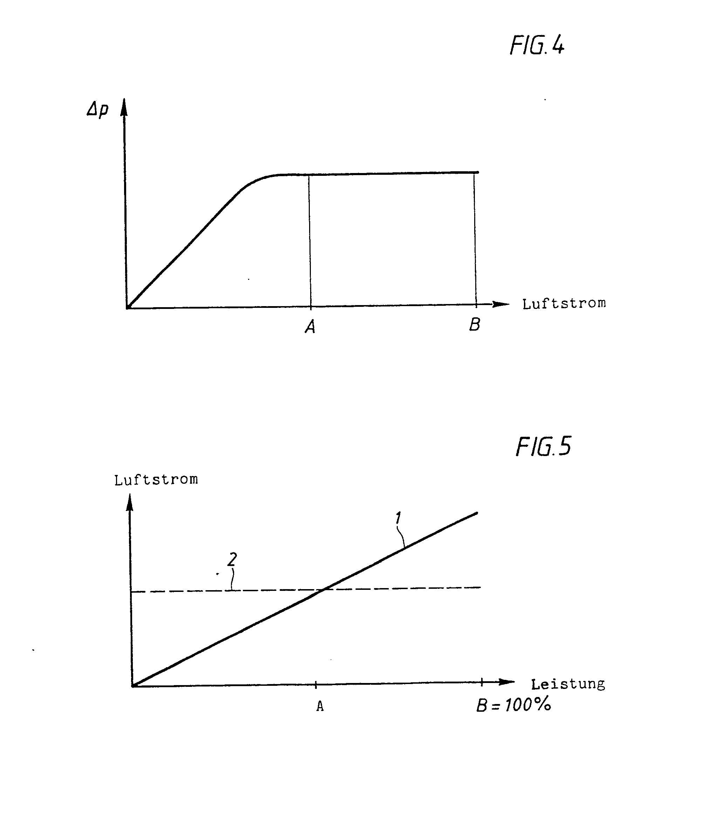

Zur Fluidisierung der Betten 20 und 24 ist ein bestimmter Mindestluftstrom erforderlich. Hierdurch entstehen spezielle Probleme beim Niederlastbetrieb. Diese Probleme werden anhand der Figuren 4 und 5 erläutert. Wie die Kurve in Figur 4 zeigt, steigt der Druckverlust $\triangle p$ mit zunehmendem Luftstrom zunächst an und erreicht bei dem Punkt A einen konstanten Wert. Der Punkt B bezeichnet den Luftstrom bei Vollast. Die voll ausgezogene Kurve 1 in Figur 5 zeigt den für die Verbrennung erforderlichen Luftstrom. Dieser steigt linear mit der Leistung. Die gestrichelte Kurve 2 in Figur 5 zeigt den für die Fluidisierung notwendigen Mindestluftstrom. Dieser ist lastunabhängig. Das bedeutet, daß der Luftstrom im oberen Leistungsbereich mit Rücksicht auf die für die Verbrennung erforderliche Luft gewählt werden kann, während der Luftstrom im unteren Leistungsbereich mit Rücksicht auf die Fluidisierung gewählt werden muß. Im unteren Leistungsbereich hat der notwendige Luftstrom zur Folge, daß mit einem Überschuß an Verbrennungsluft gearbeitet werden muß, der umso größer ist, je geringer die Last ist, oder daß die Verbrennungskammer intermittierend betrieben werden muß. Die Punkte A in dem Diagramm können bei etwa 50% Vollast liegen. Die Punkte B gelten für Vollast.

**Patentansprüche**

1. Kesselanlage für eine mehrbettige Brennkammer (10) mit einem ersten unteren Brennkammerraum (18), welcher ein erstes unteres Wirbelbett (20) sowie ein kühlbares Rohrbündel (34) zur Wärmeerzeugung enthält, mit einem zweiten oberen Brennkammerraum (22), welcher ein zweites oberes Wirbelbett (24) enthält, mit einer Luftkammer (16) unter dem ersten Wirbelbett (20), mit Düsen (28) im Boden (12) des ersten Wirbelbetts (20) für die Zufuhr von Verbrennungsluft aus der Luftkammer (16) in den ersten Brennkammerraum (18), mit Düsen (36) im Boden (14) des zweiten Brennkammerraums (22) für die Zuführung von Verbrennungsgasen aus dem ersten Brennkammerraum (18) in den zweiten Brennkammerraum (22), und mit einer oder mehreren steuerbaren oder regelbaren Transporteinrichtung/en (68, 70), zum Transport von Bettmaterial aus dem oberen in den unteren Brennkammerraum (18), wobei Meßeinrichtungen vorhanden sind zur Messung der augenblicklichen von der Anlage erzeugten Leistung und die Steuer- bzw. Regeleinrichtungen zur Steuerung bzw. Regelung der Höhe eines fluidis erten Bettes in einem der Brennkammerräume zwecks Anpassung der Dampferzeugung an den augenblicklichen Leistungsbedarf dienen, dadurch gekennzeichnet, daß der zweite, obere Brennkammerraum (22) kein kühlbares Rohrbündel zur Wärmeerzeugung enthält, daß die eine oder mehreren Transporteinrichtung/en (68, 70) auch Bettmaterial aus dem ersten, unteren Brennkammerraum (18) in den zweiten, oberen Brennkammerraum (22) zu fördern vermag und daß die Steuer- oder Regeleinrichtungen zur Verstellung der Betthöhe im ersten, unteren Brennkammerraum (18) durch Zu- oder Abfuhr vom Bettmaterial aus dem beziehungsweise in den zweiten, oberen Brennkammerraum als Funktion der augenblicklich abzugebenden Leistung dienen.

2. Kesselanlage nach Anspruch 1, dadurch gekennzeichnet, daß mehrere parallelarbeitende Transporteinrichtung en (68, 70) vorhanden sind.

3. Kesselanlage nach einem der vorhergehenden Ansprüche, dadurch gekennzeichnet, daß Meßeinrichtungen (126, 128) vorhanden sind zur Bestimmung der Höhen des unteren und des oberen Wirbelbetts (20, 24), daß eine Signalverarbeitungsanlage (142) vorhanden ist, in welcher die Augenblickswerte der Betthöhen mit Werten, die für die von der Anlage gerade zu liefernde Leistung gelten, verglichen werden, und daß Steuer- oder Regeleinrichtungen (156) vorhanden sind zur Steuerung oder Regelung des Bettmaterialtransportes in den Transporteinrichtungen für den Transport von Bettmaterial von einem Bett in das andere.

4. Kesselanlage nach Anspruch 3, dadurch gekennzeichnet, daß die Meßeinrichtungen (126, 128) für die Betthöhen aus Differenzdruckmeßgeräten bestehen, die einerseits an den unteren Teil der Brennkammerräume (18, 22) und andererseits an den Freiraum (32, 40) über den Betten angeschlossen sind.

5. Kesselanlage nach einem der vorhergehenden Ansprüche, dadurch gekennzeichnet, daß Temperatursensoren (138) vorhanden sind, die im unteren Bett (20) angeordnet sind und die mit der Signalverarbeitungsanlage (142) verbunden sind, wo der Istwert der Temperatur mit einem Sollwert verglichen wird.

6. Verfahren zur Steuerung oder Regelung einer Kesselanlage für eine mehrbettige Brennkammer nach einem der vorhergehenden Ansprüche, dadurch gekennzeichnet, daß die Temperatur unter allen Betriebsbedingungen in einem für die Verbrennung günstigen Bereich zwischen einem oberen und einem unteren Temperaturwert gehalten wird durch Anpassung der Betthöhe im unteren Brennkammerraum (18) an die Kessellast durch Überführung von Bettmaterial aus dem einen Bett in das andere derart, daß die Kühlleistung des Teils des Rohrbündels (34), welches innerhalb des unteren Bettes (20) liegt, der dem Bett zugeführten Leistung angepaßt ist.

7. Verfahren nach Anspruch 6, dadurch gekennzeichnet, daß die Summe des Bettmaterials in den Betten (20, 24) im wesentlichen konstant ist unabhängig von der von der Anlage abgegebenen Leistung.

8. Verfahren nach einem der Ansprüche 6 oder 7, dadurch gekennzeichnet, daß die Betthöhen durch Messung des Druckabfalls an den Betten ermittelt werden.

9. Verfahren nach einem der Ansprüche 6 bis 8, dadurch gekennzeichnet, daß die Meßsignale von den Meßeinrichtungen (33, 138, 126, 128) zur Messung der Ist-Bedingungen des Kessels, der Kessellasttemperatur im ersten Bett und der Betthöhen einer Signalverarbeitungsanlage (142) zugeführt werden, in welcher diese Werte mit Sollwerten für die augenblickliche Last verglichen werden und welche die Steuereinrichtung (156) für den Transport von Bettmaterial aus dem einen Bett in das andere Bett in Abhängigkeit von Größe und Richtung der ermittelten Abweichungen zwischen Ist- und Sollwerten steuert.

## Revendications

1. Chaufferie pour une installation d'enceinte de combustion (10) à plusieurs lits, comprenant une première chambre de l'enceinte de combustion inférieure (18) qui comporte un premier lit fluidisé inférieur (20), ainsi qu'un faisceau tubulaire (34) susceptible d'être refroidi et destiné à produire de la chaleur, une seconde chambre de l'enceinte de combustion supérieur (22) qui comporte un second lit fluidisé supérieur (24), une chambre pour de l'air (16) en-dessous du premier lit fluidisé (20), des buses (28) en le plateau (12) du premier lit fluidisé (20) destiné à amener de l'air de combustion provenant de la chambre pour l'air (16) à la première chambre de l'enceinte de combustion (18), des buses (36) dans le plateau (14) de la seconde chambre de l'enceinte de combustion (22) destinées à amener des gaz de combustion de la première chambre de l'enceinte de combustion (18) à la seconde chambre de l'enceinte de combustion (22), et un ou plusieurs dispositifs de transport (68, 70) susceptibles d'être commandés ou réglables et destinés à transporter du matériau de lit de la chambre de combustion supérieure à la chambre de l'enceinte de combustion inférieure (18), des dispositifs de mesure étant prévus pour mesurer la puissance instantanée produite par l'installation, et les dispositifs de commande ou de régulation servant à commander et à réguler la hauteur d'un lit fluidisé dans l'une des chambres de combustion en vue d'adapter la production de vapeur aux besoins instantanés de puissance, caractérisée en ce que la seconde chambre de l'enceinte de combustion supérieure (22) ne comporte pas de faisceau tubulaire susceptible d'être refroidi et destiné à produire de la chaleur, en ce que le ou les dispositifs de transport (68, 70) peuvent transporter également du matériau de lit de la première de l'enceinte de combustion inférieure (18) à la seconde chambre de l'enceinte de combustion supérieure (22), et en ce que les dispositifs de commande ou de régulation servent à régler la hauteur du lit dans la première chambre de l'enceinte de combustion inférieure (18) en amenant du matériau de lit provenant de la seconde chambre de l'enceinte de combustion supérieure ou en en évacuant en fonction de la puissance instantanée à fournir.

2. Chaufferie suivant la revendication 1, caractérisée en ce qu'il est prévu plusieurs dispositifs de transport (68, 70) opérant en parallèle.

3. Chaufferie suivant l'une des revendications précédentes, caractérisée en ce qu'il est prévu des dispositifs de mesure (126, 128) pour déterminer la hauteur du lit fluidisé inférieur (20) et supérieur (24), en ce qu'il est prévu une installation de traitement de signaux (142) dans laquelle les valeurs instantanées des hauteurs de lits sont comparées avec des valeurs qui sont valables pour la puissance à fournir précisément par l'installation, et en ce qu'il est prévu des dispositifs de commande ou de régulation (156) destinés à commander ou à réguler le transport du matériau de lit dans les dispositifs de transport, pour transporter du matériau de lit d'un lit à l'autre.

4. Chaufferie suivant la revendication 3, caractérisée en ce que les dispositifs de mesure (126, 128) des hauteurs du lit sont constitués de manomètres différentiels qui sont raccordés, d'une part, à la partie inférieure des chambre de l'ensemble de l'enceinte de combustion (18, 22) et, d'autre part, à l'espace libre (32, 40) au-dessus des lits.

5. Chaufferie suivant l'une des revendications précédentes, caractérisée en ce qu'il est prévu des sondes de température (138) qui sont disposées dans le lit inférieur (20) et qui sont reliées à l'installation de traitement des signaux (142) où la valeur réelle de la température est comparée à une valeur de consigne.

6. Procédé de commande ou de régulation d'une chaufferie pour une enceinte de combustion à plusieurs lits suivant l'une des revendications précédentes, caractérisé en ce qu'il consiste à maintenir la température, parmi toutes les autres conditions de fonctionnement, dans une plage favorable à la combustion entre une valeur supérieure de la température et une valeur inférieure de la température, en adaptant la hauteur du lit dans la chambre inférieure de l'enceinte de combustion (18) à la charge de la chaufferie, par transfert de matériau de lit d'un lit à l'autre, de façon que la puissance de refroidissement de la partie du faisceau tubulaire (34) qui se trouve dans le lit inférieur (20) soit adaptée à la puissance apportée au lit.

7. Procédé suivant la revendication 6, caractérisé en ce que la somme de matériau de lit se trouvant dans les lits (20 et 24) est sensiblement constante, quelle que soit la puissance fournie par l'installation.

8. Procédé suivant l'une des revendications 6 ou 7, caractérisé en ce qu'il consiste à déterminer les hauteurs des lits en mesurant la perte de charge dans les lits.

9. Procédé suivant l'une des revendications 6 à 8, caractérisé en ce qu'il consiste à envoyer les signaux de mesure des dispositifs de mesure (33, 138, 126, 128) destinés à mesurer les conditions réelles de la chaufferie, la température de charge de la chaufferie dans le premier lit et les hauteurs de lits, à une installation de traitement des signaux (142) dans laquelle ces valeurs sont comparées à des valeurs de consigne pour la charge instantanée, et qui commandent le dispositif de commande (156) de transport du matériau de lit d'un lit à l'autre, en fonction de la valeur et du sens des écarts déterminés entre la valeur réelle et la valeur de consigne.

**Claims**

1. Boiler plant for a multibed combustion chamber (10) with a first, lower combustion chamber space (18) accommodating a first, lower fluidized bed (20) and a coolable tube nest (34) for generating heat, with a second, upper combustion chamber space (22) accommodating a second, upper fluidized bed (24), with an air plenum chamber (16) below the first fluidized bed 20, with nozzles (28) in the bottom (12) of the first fluidized bed (20) for the supply of combustion air from the air plenum chamber (16) to the first combustion chamber space (18), with nozzles (36) in the bottom (14) of the second combustion chamber space (22) for the supply of combustion gases from the first combustion chamber space (18) to the second combustion chamber space (22), and with one or a plurality of controllable or regulatable transport device/devices (68, 70) for the transport of bed material from the upper into the lower combustion chamber space (18), and with measuring devices for measuring the actual power generated by the plant, said control or regulating devices for controlling or regulating the height of the fluidized bed in one of the combustion chamber spaces being intended for adjusting the steam generation to the actual power demand, characterized in that the second, upper combustion chamber space (22) is without a coolable tube nest for heat generation, that the one or several transport device/devices (68, 70) is/are also capable of transporting the bed material from the first, lower combustion chamber space (18) into the second, upper combustion chamber space (22), and that the control or regulating devices are intended for varying the height of the bed in the first, lower combustion chamber space (18) by supply or discharge of bed material from and to, respectively, the second, upper combustion chamber space as a function of the actual power demand.

2. Boiler plant according to claim 1 characterized in that there are a plurality of transport devices (68, 70) operating in parallel.

3. Boiler plant according to any of the preceding claims, characterized in that measuring devices (126, 128) are provided for measuring the height of the lower and the upper fluidized bed (20, 24), that a signal processing means (142) is provided in which the actual values of the bed heights are compared to values describing the power demanded from the plant at the actual time, and that control or regulating devices (156) are provided for controlling or regulating the transport of bed material in the transport devices for the transport of bed material from one bed to the other.

4. Boiler plant according to claim 3, characterized in that the measuring devices (126, 128) for the bed heights are constituted by differential pressure gauges which are connected, on the one hand, to the lower part of the combustion chamber spaces (18, 22) and, on the other hand, to the free space (32, 40) above the beds.

5. Boiler plant according to any of the preceding claims, characterized in that the temperature sensors (138) are provided in the lower bed (20) which sensors are connected to said signal processing means where the actual value of the temperature is compared to a reference value.

6. Method for controlling or regulating a boiler plant for a multibed combustion chamber according to any of the preceding claims, characterized in that the temperature is maintained under all operating conditions within a range between an upper and a lower temperature value, said range being favourable for the combustion, by adjusting the height of the bed in the lower combustion chamber space (18) to the boiler load by transferring bed material from one bed to the other bed in such a way that the cooling power of that part of the tube nest (34) which is positioned within the lower bed (20) matches the power supplied to the bed.

7. Method according to claim 6, characterized in that the total amount of bed material in the beds (20, 24) is substantially constant, independent of the power delivered by the plant.

8. Method according to any of claims 6 or 7, characterized in that the bed height is determined by measuring the pressure loss in the beds.

9. Method according to any of claims 6 to 8, characterized in that the measuring signals of the measuring devices (33, 138, 126, 128) for measuring the actual conditions of the boiler, the boiler load temperature in the first bed and the bed heights are supplied to a signal processing means (142) where these values are compared to reference values for the load at the actual time and which controls the control device (156) for the transport of bed material from the one bed to the other bed in dependence upon the magnitude and sign of the deviations obtained between the actual and reference values.

FIG.1

FIG. 2

2

## FIG. 3

FIG.4

FIG.5